# FASCICULE DE BREVET EUROPEEN

(11) **EP 0 874 214 B1**
(45) Date de publication et mention de la délivrance du brevet: **23.07.2003**
(21) Numéro de dépôt: 98400952.2
(22) Date de dépôt: 17.04.1998
(51) Int. Cl.: G01B 7/16, E02D 1/08, E02D 33/00

(54) **Procédé de détection d'effondrements de terrain sous un ouvrage de génie civil**
Verfahren zum Erkennen von Bodensetzungen unter einem Tiefbauwerk
Procedure for detecting ground subsidence under a civil engineering work

(30) Priorité: 24.04.1997 FR 9705063
(43) Date de publication de la demande: 28.10.1998
(73) Titulaire: Bidim Geosynthetics S.A., 95870 Bezons (FR)
(72) Inventeur: Delmas, Philippe, 78330 Fontenay Le Fleury (FR); Nancey, Alain, 95450 Commeny (FR)
(74) Mandataire: Le Bras, Hervé

(56) Documents cités:
- FR-A- 2 626 665
- FR-A- 2 728 677
- US-A- 4 429 580
- US-A- 5 589 257

## Description

L'invention concerne un procédé de détection d'effondrements de terrain sous un ouvrage de génie civil.

Lorsqu'un ouvrage de génie civil est réalisé sur un terrain susceptible de comporter des cavités naturelles ou artificielles non répertoriées, il est d'usage d'appliquer des géosynthétiques dans l'ouvrage ou sous l'ouvrage, dont la fonction essentielle est de supporter l'ouvrage en cas d'effondrement de la voûte d'une cavité, afin d'éviter des accidents graves. Ces géosynthétiques sont notamment utilisés lors des constructions des autoroutes ou des voies de chemin de fer.

Il est en outre utile de connaître l'existence de ces effondrements et leur positionnement, ainsi que le degré de danger éventuel, afin de procéder à temps aux réparations de l'ouvrage.

FR-A-2728677 a déjà proposé un géosynthétique pourvu d'une pluralité de fils parallèles susceptibles de transmettre des signaux, les fils étant calibrés à des valeurs d'allongement et rupture prédéterminées correspondant à des seuils de déformation du géosynthétique. On mesure le seuil de déformation atteint en envoyant des signaux dans les fils et en détectant la présence ou l'absence de réponse à ces signaux. L'absence de réponse est due à une rupture du fil correspondant.

Le géosynthétique proposé dans ce document a deux fonctions. Il doit d'abord supporter les efforts verticaux en cas d'effondrement du sol sans déformations excessives afin d'éviter des désordres majeurs dans l'ouvrage. Il doit en outre signaler un effondrement éventuel. La première fonction exige que le géosynthétique ait un module élevé en traction afin d'éviter les désordres dans l'ouvrage. La deuxième fonction doit permettre la détection d'un effondrement ou affaissement de terrain avec certitude, même si l'effondrement entraîne une faible déformation du géosynthétique. Ceci exige que les fils correspondant au seuil de déformation le plus bas se rompent lorsque le géosynthétique subit une faible déformation. Or, il est techniquement difficile de calibrer avec précision des fils qui doivent se rompre avec un faible allongement, d'autant plus que les fils employés sont soumis à des agressions diverses dans les sols et doivent conserver leurs qualités mécaniques et conductrices de signaux pendant la durée de vie de l'ouvrage. On conçoit donc que, lorsque la cheminée créée par l'effondrement de la voûte a un faible diamètre, le géosynthétique proposé dans le document mentionné ci-dessus, du fait de son module élevé en traction, ne subisse pas une déformation suffisante pour entraîner la rupture des fils à seuil de déformation faible afin de permettre la détection de cet effondrement.

Le but de l'invention est de proposer un procédé qui permette de détecter un effondrement avec un seuil d'alerte faible tout en assurant l'intégrité de l'ouvrage jusqu'à un autre seuil d'alerte nettement plus élevé.

L'invention atteint son but
par le fait que l'on applique dans l'ouvrage ou sous l'ouvrage deux géosynthétiques sensiblement horizontaux séparés par une couche de sol d'épaisseur homogène, le géosynthétique inférieur ayant un faible module en traction et étant pourvu de deux nappes de fils parallèles susceptibles de transmettre des signaux, les fils de l'une des nappes étant calibrés à une valeur d'allongement de rupture prédéterminée correspondant à un seuil d'alerte inférieur et les fils de l'autre nappe étant calibrés à une autre valeur d'allongement correspondant à un seuil d'alerte supérieur, et le géosynthétique supérieur ayant un module élevé en traction, le seuil d'alerte atteint étant mesuré en envoyant des signaux dans les fils de chacune des nappes et en détectant la présence ou l'absence de réponse à ces signaux, et
par le fait que l'épaisseur de la couche de sol séparant les deux géosynthétiques est déterminée de manière à provoquer sous son seul poids une déformation du géosynthétique inférieur supérieure au seuil d'alerte inférieur et inférieure au seuil d'alerte supérieur en cas d'effondrement du sol sous le géosynthétique inférieur.

Grâce au procédé selon l'invention, la fonction de détection des effondrements du terrain et la fonction de sauvegarde de l'ouvrage sont séparées et accomplies par deux géosynthétiques différents. Le géosynthétique inférieur a un faible module en traction et est suffisamment déformé par le seul poids de la couche de sol intermédiaire pour entraîner avec certitude la rupture de fils de l'une des nappes.

Le module élevé en traction du géosynthétique supérieur permet d'éviter une déformation importante de ce dernier et donc d'éviter de transmettre des efforts verticaux sur la couche de sol intermédiaire, en deçà du seuil d'alerte inférieur. L'atteinte du seuil d'alerte supérieur signifie que le géosynthétique inférieur subit une charge plus importante que le seul poids de la couche de sol intermédiaire. Ceci signifie que le géosynthétique supérieur travaille au-delà d'un seuil de niveau de service et fournit un renseignement sur la gravité du désordre.

La présence du géosynthétique inférieur permet de dimensionner le géosynthétique supérieur au plus juste, en tenant compte de l'existence du géosynthétique inférieur. Ainsi, le géosynthétique supérieur pourra être dimensionné pour reprendre la charge verticale pour une déformation inférieure à la déformation correspondant au seuil d'alerte inférieur. La sécurité vis-à-vis de la rupture pourra être assurée par ailleurs par des fils de renfort reprenant l'effort désiré intégrant le coefficient de sécurité pour une déformation plus élevée pouvant atteindre 18 à 20 %.

Avantageusement, le seuil d'alerte inférieur est obtenu pour un allongement du géosynthétique inférieur compris entre 4 et 6 %. Le seuil d'alerte supérieur est obtenu pour un allongement du géosynthétique inférieur compris entre 8 et 12 %. Le géosynthétique supérieur est pourvu de fils de renfort reprenant l'effort pour une déformation correspondant à un allongement atteignant 18 %.

D'autres avantages et caractéristiques de l'invention ressortiront à la lecture de la description suivante faite à titre d'exemple non limitatif et en référence aux dessins annexés dans lesquels :
- la figure 1 est une coupe verticale de l'ouvrage montrant la disposition des deux géosynthétiques dans une zone susceptible de s'effondrer ;
- la figure 2 est une coupe verticale de l'ouvrage au-dessus d'une zone effondrée.

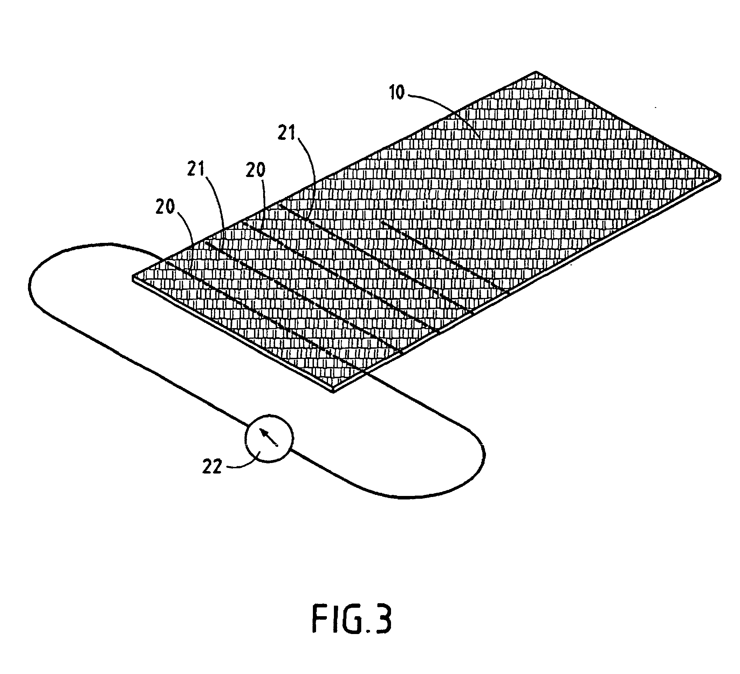

- la figure 3 montre la configuration du géosynthétique inférieur.

Sur le dessin, on a représenté par la référence 1 un ouvrage de génie civil, un remblai par exemple, disposé sur la surface 2 d'un sol 3. Ce sol 3 comporte des cavités internes 4 séparées de la surface 2 par des voûtes 5. Pour protéger l'ouvrage 1 contre des désordres susceptibles d'être provoqués à la suite de l'effondrement d'une voûte 5, on dispose sur le sol 3 un premier géosynthétique 10 ayant un faible module en traction et qui est équipé de deux nappes de fils parallèles, susceptibles de transmettre des signaux. Ces signaux peuvent être notamment des signaux électriques. La rupture d'un fil d'une nappe est alors détectée par l'absence de réponse à un signal transmis dans ce fil.

Le premier géosynthétique 10 est recouvert par une couche de sol 11 d'épaisseur homogène H, elle-même recouverte par un deuxième géosynthétique 12 ayant un module élevé en traction. Cet ensemble est disposé sous le remblai 14.

Le premier géosynthétique 10 se présente sous la forme d'une bande ou nappe et est réalisé en un matériau imputrescible. Il peut s'agir par exemple d'un produit géosynthétique constitué d'un tressage de fils de trame et de fils de chaîne ou d'un géotextile non tissé. Ce qui compte surtout c'est que son module en traction est faible. Il comporte deux nappes de fils parallèles 20 et 21 et alternés qui ont des valeurs d'allongement de rupture calibrées et différenciées. Les fils 20 de la première nappe se rompent lorsque le géosynthétique subit une déformation de 5 % par exemple, tandis que les fils 21 de la deuxième nappe acceptent un allongement de 8 % par exemple. La déformation de 5 % correspond à un premier seuil d'alerte et la déformation de 8 % à un deuxième seuil d'alerte supérieur au premier seuil.

En l'absence d'effondrement des voûtes 5, on peut estimer que la déformation du premier géotextile 10 est nulle.

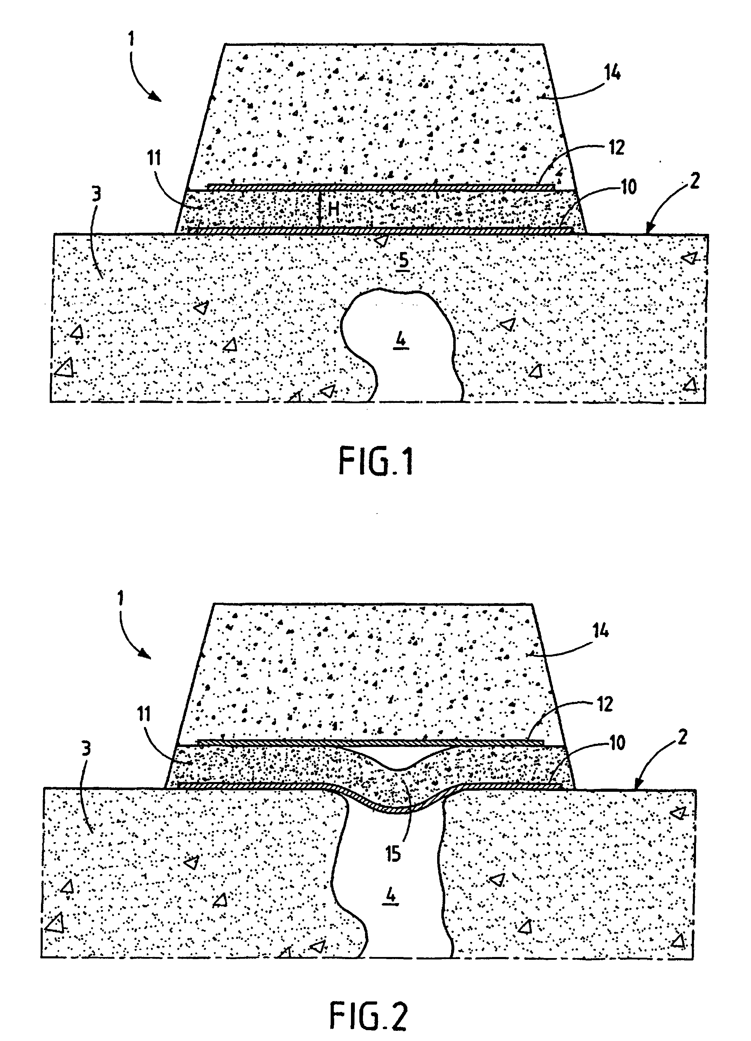

L'épaisseur H de la couche de sol 11 est calculée de telle manière qu'en cas d'effondrement d'une voûte 5, ainsi que cela est montré sur la figure 2, le poids de la couche de sol 11 entraîne une déformation du premier géosynthétique 10 correspondant à un allongement compris entre 5 % et 8 %. Au moins un fil 20 de la première nappe est ainsi rompu en cas d'effondrement de la voûte 5 d'une cavité 4, sous l'action du poids de la couche de sol 11, tandis que les fils 21 de la deuxième nappe ne sont pas rompus. L'épaisseur H est comprise entre 20 et 40 cm.

Le deuxième géotextile 12 ayant un module élevé en traction supporte les efforts verticaux dus au poids de l'ouvrage 1, lorsque la section de la cheminée issue de l'effondrement de la voûte 5 est faible et entraîne une élongation du deuxième géosynthétique 12 inférieure à 5 %. Dans ces conditions, le seuil d'alerte inférieur est atteint et le deuxième géosynthétique 12 n'exerce pas de forces sur la couche de sol 15 située au-dessus de la cheminée. Lorsque la section de la cheminée s'agrandira, le deuxième géosynthétique 12 devra supporter des efforts supérieurs et s'allongera davantage. Lorsqu'il se sera allongé de 8 % par exemple, il transmettra des efforts sur la couche 15, ce qui provoquera la rupture des fils 21 de la deuxième nappe et la détection du seuil d'alerte supérieur.

Les fils 20 et 21 du premier géosynthétique peuvent être par exemple des fils électriques qui sont raccordés électriquement à des générateurs 22 de courant. L'absence ou la présence d'une rupture dans un fil électrique est facilement détectée en appliquant une tension électrique aux extrémités de ce fil. L'absence d'un courant signale une rupture, et la présence d'un courant signifie une non-rupture du fil électrique considéré.

Le deuxième géosynthétique 12 comporte des fils de renfort qui reprennent l'effort désiré pour une déformation élevée de 18 % par exemple.

Le procédé selon l'invention permet ainsi de détecter des effondrements de terrain qui entraînent une déformation de l'ordre de 5 % du premier géosynthétique 10. Un deuxième seuil d'alerte est fourni lorsque la déformation du premier géosynthétique 10 est supérieure à 8 %.

Lorsque seul le seuil d'alerte inférieur est atteint, le deuxième géosynthétique 12 subit une faible déformation.

## Revendications

1. Procédé de détection d'effondrements de terrains, sous un ouvrage de génie civil,
selon lequel on applique dans l'ouvrage ou sous l'ouvrage deux géosynthétiques (10, 12) sensiblement horizontaux séparés par une couche de sol (11) d'épaisseur homogène (H), le géosynthétique inférieur (10) ayant un faible module en traction et étant pourvu de deux nappes de fils (20, 21) parallèles susceptibles de transmettre des signaux, les fils (20) de l'une des nappes étant calibrés à une valeur d'allongement de rupture prédéterminée correspondant à un seuil d'alerte inférieur et les fils (21) de l'autre nappe étant calibrés à une autre valeur d'allongement correspondant à un seuil d'alerte supérieur, et le géosynthétique supérieur (12) ayant un module élevé en traction, le seuil d'alerte atteint étant mesuré en envoyant des signaux dans les fils (20, 21) de chacune des nappes et en détectant la présence ou l'absence de réponse à ces signaux, et
selon lequel l'épaisseur (H) de la couche de sol séparant les deux géosynthétiques est déterminée de manière à provoquer sous son seul poids une déformation du géosynthétique inférieur (10) supérieure au seuil d'alerte inférieur et inférieure au seuil d'alerte supérieur en cas d'effondrement du sol sous le géosynthétique inférieur.

2. Procédé selon la revendication 1, selon lequel le seuil d'alerte inférieur est obtenu pour un allongement du géosynthétique inférieur (10) compris entre 4 et 6 %.

3. Procédé selon la revendication 2, selon lequel le seuil d'alerte supérieur est obtenu pour un allongement du géosynthétique inférieur (10) compris entre 8 et 12 %.

4. Procédé selon la revendication 3, selon lequel le géosynthétique supérieur (12) est pourvu de fils de renfort reprenant l'effort pour une déformation correspondant à un allongement atteignant 18 %.

## Patentansprüche

1. Verfahren zum Erkennen von Bodensetzungen unter einem Tiefbauwerk, gemäß dem man in das Werk oder unter dem Werk zwei im Wesentlichen horizontale Geosynthetikschichten (10, 12) anordnet, die durch eine Erdschicht (11) von homogener Dicke (H) getrennt sind, wobei die untere Geosynthetikschicht (10) ein schwaches Zugmodul hat und mit zwei parallelen Lagen von Drähten (20, 21) versehen ist, die zur Übermittlung von Signalen geeignet sind, wobei die Drähte (20) von einer der Lagen auf einen vorgegebenen zum Abriss führenden Dehnungswert geeicht sind, der einer unteren Alarmschwelle entspricht, und die Drähte (21) von der anderen Lage auf einen anderen Dehnungswert geeicht sind, der einer oberen Alarmschwelle entspricht, und die obere Geosynthetikschicht (12) ein angehobenes Zugmodul hat, wobei die erreichte Alarmschwelle gemessen wird, indem Signale in die Drähte (20, 21) von jeder der Lagen geschickt werden und die Anwesenheit oder Abwesenheit von einer Antwort auf diese Signale ermittelt wird, und
gemäß dem die Dicke (H) der Erdschicht, die die zwei Geosynthetikschichten trennt, derart bestimmt wird, dass unter ihrem Eigengewicht eine Deformation der unteren Geosynthetikschicht (10) bewirkt wird, die oberhalb der unteren Alarmschwelle und unterhalb der oberen Alarmschwelle im Falle von einer Bodensetzung unter der unteren Geosynthetikschicht liegt.

2. Verfahren nach dem Anspruch 1, gemäß dem die untere Alarmschwelle für eine Dehnung der unteren Geosynthetikschicht (10) zwischen 4 und 6% erreicht wird.

3. Verfahren nach dem Anspruch 2, gemäß dem die obere Alarmschwelle für eine Dehnung der unteren Geosynthetikschicht (10) zwischen 8 und 12% erreicht wird.

4. Verfahren nach dem Anspruch 3, gemäß dem die obere Geosynthetikschicht (12) mit Drähten zur Verstärkung versehen ist, die die Belastung für eine Deformation, die einer Dehnung von 18% entspricht, aufnehmen.

## Claims

1. Process for detection of ground subsidence under civil engineering works, in accordance with which, in the work or under the work, two substantially horizontal geosynthetics (10, 12) are applied, separated by a layer of ground (11) of uniform thickness (H), the lower geosynthetic (10) having a low modulus of traction and being provided with two sheets of parallel filaments (20, 21) able to transmit signals, the filaments (20) of one of the sheets being calibrated to a predetermined value of elongation at breakage corresponding to a lower alarm threshold and the filaments (21) of the other sheet being calibrated to another elongation value corresponding to an upper alarm threshold, and the upper geosynthetic (12) having a high modulus of traction, the alarm threshold obtained being measured by sending signals in the filaments (20, 21) of each of the sheets and by detecting the presence or absence of response to these signals, and in accordance with which the thickness (H) of the layer of ground separating the two geosynthetics is determined so as to cause under its weight alone deformation of the lower geosynthetic (10) greater than the lower alarm threshold and less than the upper alarm threshold in case of subsidence of the ground beneath the lower geosynthetic.

2. Process as described in claim 1, in accordance with which the lower alarm threshold is obtained for an elongation of the lower geosynthetic (10) of between 4 and 6%.

3. Process as described in claim 2, in accordance with which the upper alarm threshold is obtained for an elongation of the lower geosynthetic (10) of between 8 and 12%.

4. Process as described in claim 3, in accordance with which the upper geosynthetic (12) is provided with reinforcing filaments taking up the strain for deformation corresponding to an elongation reaching 18%.
